# EUROPEAN PATENT APPLICATION

(11) **EP 3 690 703 A1**
(43) Date of publication of application: **05.08.2020**
(21) Application number: 19154122.6
(22) Date of filing: 29.01.2019
(51) Int. Cl.: G06K 9/00, G06K 9/46, G06K 9/62

(54) **POSTURES RECOGNITION OF OBJECTS IN AUGMENTED REALITY APPLICATIONS**

(71) Applicant: Siemens Aktiengesellschaft, 80333 München (DE)
(72) Inventor: Wilde, Robert, 81379 München (DE)

(57) **Abstract**

The invention specifies an automated method of posture recognition, a computational device for recognising postures, a head mounted device, a use of the head mounted device, a computer program product, and a computer-readable storage medium.

The advantage of the invention lies in the use of photorealistic rendered data to generate training data.

## Description

### Field of the Invention

The present invention relates to an automated method of posture recognition, a computational device for recognising postures, a head mounted device, a use of the head mounted device, a computer program product, and a computer-readable storage medium. The invention can be used for recognition of postures of objects, especially of hands in virtual or augmented reality applications, particularly in factory environments.

### Background of the Invention

Motion capture has numerous applications. For example, in filmmaking, digital models generated using motion capture can be used as the basis for the motion of computer-generated characters or objects. In sports, motion capture can be used by coaches to study an athlete's movements and guide the athlete toward improved body mechanics. In video games or virtual reality applications, motion capture can be used to allow a person to interact with a virtual environment in a natural way, e.g., by waving to a character, pointing at an object, or per forming an action such as Swinging a golf club or baseball bat. In factories, motion capture can support employees with the fabrication workflow.

The term "motion capture" refers generally to processes that capture movement of a subject in three-dimensional (3D) space and translate that movement into, for example, a digital model or other representation. Motion capture is typically used with complex subjects that have multiple separately articulating members whose spatial relationships change as the subject moves. For instance, if the subject is a walking person, not only does the whole body move across space, but the position of arms and legs relative to the person's core or trunk are constantly shifting. Motion capture systems are typically interested in modelling this articulation.

Most existing motion capture systems rely on markers or sensors worn by the subject while executing the motion and/ or on the strategic placement of numerous cameras in the environment to capture images of the moving Subject from different angles. Such systems tend to be expensive to construct. In addition, markers or sensors worn by the subject can be cumbersome and interfere with the subject's natural movement. Further, systems involving large numbers of cameras tend not to operate in real time, due to the volume of data that needs to be analysed and correlated. Such considerations of cost, complexity and convenience have limited the deployment and use of motion capture technology.

Automatic, markerless detection of objects, e.g. hands, determination of hand poses, finger poses or in general body positions and movements of animals or humans in real time is a major problem. Skin colours, clothing and occlusion affect the quality of the tracking. Heavy, black gloves cannot be tracked at all. Users must wear tracking gloves for optimal tracking, but in a factory environment, users usually wear gloves designed for that environment and the required tasks. Including tracking hardware in these gloves is too expensive.

There are already methods to train Neural Networks with a dataset consisting of photographs/video frames of the hands and the joint/pose data. As joint data needs to be lined up with the photographs, it must be manually determined. For accurate results, a dataset consisting of thousands, if not millions, of photographs needs to be fed into a neural network. Using a manual process for this is not feasible.

An automatic tracking process requires attaching markers to the hands and fingers (physical spheres on gloves, dots painted on the hands, tracking gloves). These markers would be visible on the photographs and would have to be removed digitally, which is also not feasible.

According prior art is given in patent US 8638989 B2 and published patent application WO 2012135553 A1.

### Summary of the Invention

The objective of the invention is to provide an improvement to the prior art.

Advantageous embodiments are provided in the dependent claims. Further features, application possibilities, and advantages of the invention result from the following description.

According to the invention the objective is accomplished by training an artificial intelligence algorithm with animated photorealistic rendered picture frames of rigged data of the training object.

The invention claims an automated method of posture recognition of at least a portion of a target object. The method comprises generating animated photorealistic rendered picture frames of at least one training object based on rigged data (vector data) of the training object in a multitude of postures, training of an artificial intelligence algorithm with the picture frames and corresponding rigged data whereby the artificial intelligence algorithm is trained to recognize postures of the target object, and recognizing the posture of the target object by the artificial intelligence algorithm.

This has the advantage that instead of real photographic data, photorealistic rendered data is used to generate training data. Therefore, a broad range of training data in different postures can be used and the performance of the recognition improved.

According to a further embodiment, the training objects are equipped with tracking markers. The training data (photorealistic rendered data), however, does not carry markers. This has the advantage that markers have not to be removed manually or automatic before training.

According to a further embodiment, the target object and the training object are part of human or animal body. This has the advantage that recognition of parts of the human or animal body can be performed.

According to a further embodiment, the target objects and the training object are hands with or without gloves or hands with another cover. Further possible training objects are human or animal faces, mimics, body positions. This has the advantage that especially hand, hands with gloves, faces, mimics or body positions can be recognized.

According to a further embodiment, the rendered picture frames vary in colours, worn covers, and lighting conditions. This has the advantage that the recognition can be performed in different lighting conditions, for different skin colours or different covers worn by the subject.

According to a further embodiment, the artificial intelligence algorithm is a neuronal network. This has the advantage of using deep learning.

According to a further embodiment, the neural network is a convolutional neural network.

The present invention further claims a computational device for recognising the postures of at least a portion of at least one field object designed for performing the method of the present invention.

The present invention further claims a head mounted device comprising or connected to a computational device according to invention. This has the advantage that the method can be carried out by the computational device. This has the advantage that the system can be used in virtual reality or augmented reality applications.

The present invention further claims a use of the head mounted device in virtual or augmented reality applications. This has the advantage that virtual or augmented reality applications can be improved by the invention.

The present invention further claims a computer program product comprising instructions which, when the program is executed by the computational device, cause the computational device to carry out the steps of the method according to the invention.

The present invention further claims a computer-readable storage medium comprising instructions which, when executed by the computational device, cause the computational device to carry out the steps of the method of claim according to the invention.

Further benefits and advantages of the present invention will become apparent after a careful reading of the detailed description with appropriate reference to the accompanying drawings.

### Brief Description of the Drawings

- Fig. 1: shows the process of gathering training data and
- Fig. 2: shows a block diagram of a head mounted device connected with a computational device.

### Detailed Description of the Invention

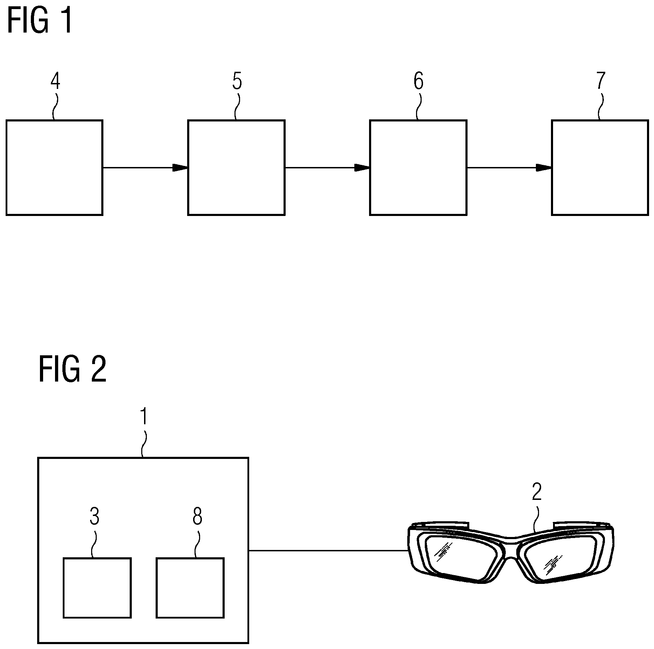

The process of gathering training data is shown in **Fig. 1**. A training object 4 which is equipped with tracking markers is used to collect rigged data 5. The rigged data 5 is used to compute animated photorealistic rendered picture frames 6. These animated photorealistic rendered picture frames 6 are used together with the corresponding information of the rigged data 5 to train an artificial intelligence algorithm 7 to recognize postures of a target object.

The target object and/ or the training object 4 can be part of human or animal body (subject). The training object 4 can for example be a hand, which carries tracking makers on each joint. While wearing the tracking markers the subject performs a variety of motions/ movements. This allows to perform accurate marker-based motion tracking of an object, e.g. a hand. Each motion/ movement comprises a multitude of positions/ postures. These postures are gathered by a suitable camera system as rigged data 5/ pose data. The subjects can wear cloves or any other cover of their hands while performing the motions/ movements. Cloves are of special relevance in factory environments while handling e.g. tools.

The rigged data 5/ pose data is than used to animate/ generate/ compute animated photorealistic rendered picture frames 6. These animated photorealistic rendered picture frames 6 are used together with the corresponding information of the rigged data 5 to train an artificial intelligence algorithm 7 to recognize postures of a target object. The artificial intelligence algorithm 7 can be a neural network, especially a convolutional neural network.

The animated photorealistic rendered picture frames 6 can vary in colours, worn covers, and lighting conditions. These variations do not need further data gathering by a camera system. Thus, the rigged data 5/ pose data of a fully functioning hand or any other object has only to be created once, as the animation rendering process and creation of animated photorealistic rendered picture frames 6 is repeatable. This has the advantage that an endless amount of data becomes available for training the neural network.

A manual clean up step, which can be part of the process has also only to be performed once. For each new type of problem/ environment (different skin colour, different type of glove, different lighting condition) the rendering process/ creation of animated photorealistic rendered picture frames 6 is restarted, and the resulting photorealistic rendered picture frames are used to train an artificial intelligence algorithm 7, which can be a neural network, especially a convolutional neural network.

For other cases (hands with missing fingers, for example) a new set of rigged data 5/ pose data can be recorded, cleaned up, and can be reused as well. An example of another case is the gathering of hands which lie above each over and cover each over as it is common while performing a movement. This is especially a problem using state of the art motion detection methods when camera-based data is used to train an algorithm. The animation of photorealistic rendered picture frames 6, however, enables to use of full data of an object (rather then data with missing pieces which are covered during the data collection process) to train an algorithm.

Thus, instead of using photographs of hands and gloves, the invention uses 3D photorealistic rendered picture frames 6. The 3D models/ photorealistic rendered picture frames 6 are modelled, surfaced, skinned, rigged and animated in a 3D animation package, and rendered using photorealistic rendering methods, such as radiosity and sub surface scattering. This offers a huge variation of hands and gloves to be rendered in all poses and from all perspectives. Skin colours, glove colours, lighting conditions can be varied as well.

The process of creating a photorealistic 3d model/ photorealistic rendered picture frame 6 of a hand or a glove and using it to train an artificial intelligence algorithm 7 is substantially cheaper than the processes used in the prior art.

**Fig. 2** shows a block diagram of a computational device 1 connected with a head mounted device 2. As an alternative the head mounted device 2 can comprise the computational device 1. The computational device 1 uses a computer program 3 and a computer-readable storage medium 8. The computer program 3 product comprising instructions which, when the program is executed by the computational device 1, cause the computational device 1 to carry out the steps of the method according to invention. The computer-readable storage medium 8 comprising instructions which, when executed by the computational device 1, cause the computational device 1 to carry out the steps of the method of claim according to the invention. The computer program 3 and the computer-readable storage medium 8 can be both located in a cloud environment.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. Automated method of posture recognition of at least a portion of a target object, **comprising:**
- generating animated photorealistic rendered picture frames (6) of at least one training object (4) based on rigged data (5) of the training object (4) in a multitude of postures,
- training of an artificial intelligence algorithm (7) with the animated photorealistic rendered picture frames (6) and corresponding rigged data (5) whereby the artificial intelligence algorithm (7) is trained to recognize postures of the target object, and
- recognizing the posture of the target object by the artificial intelligence algorithm (7).

2. Method according to claim 1, **wherein**
the training objects (4) are equipped with tracking markers.

3. Method according to one of the previous claims, **wherein**
the target object and/ or the training object (4) are part of human or animal body.

4. Method according to one of the previous claims, **wherein**
the target objects and/ or the training object (4) are hands with or without gloves or hands with another cover.

5. Method according to one of the previous claims, **wherein**
the animated photorealistic rendered picture frames (6) vary in colours, worn covers, and lighting conditions.

6. Method according to one of the previous claims, **wherein**
the artificial intelligence algorithm (7) is a neuronal network.

7. Method according to claim 6, **wherein**
the neural network is a convolutional neural network.

8. Computational device (1) for recognising the postures of at least a portion of at least one field object designed for performing the method according to one of the previous claims.

9. Head mounted device (2) comprising or connected to a computational device (1) according to claim 8.

10. Use of the head mounted device (2) according to claim 9 in a virtual or augmented reality application.

11. A computer program (3) product comprising instructions which, when the program is executed by the computational device (1), cause the computational device (1) to carry out the steps of the method according to one of the claims 1 to 7.

12. A computer-readable storage medium (8) comprising instructions which, when executed by the computational device (1), cause the computational device (1) to carry out the steps of the method of claim according to one of the claims 1 to 7.
